# EUROPÄISCHE PATENTSCHRIFT

(11) **EP 3 825 880 B1**
(45) Veröffentlichungstag und Bekanntmachung des Hinweises auf die Patenterteilung: **05.10.2022**
(21) Anmeldenummer: 19210364.6
(22) Anmeldetag: 20.11.2019
(51) Int. Cl.: G06F 21/30, G06F 21/45, H04W 12/041, H04W 12/08, H04W 12/61, H04W 4/70, G06F 21/31

(54) **GESCHÜTZTES RÜCKSETZEN EINES IOT-GERÄTS**
PROTECTED IOT DEVICE RESET
REMISE À ZÉRO PROTÉGÉE D'UN APPAREIL IDO

(43) Veröffentlichungstag der Anmeldung: 26.05.2021
(73) Patentinhaber: Siemens Energy Global GmbH & Co. KG, 81739 München (DE)
(72) Erfinder: Falk, Rainer, 85586 Poing (DE); Nagel, Felix, 90408 Nürnberg (DE); Winter, Christian, 91126 Rednitzhembach (DE)

(56) Entgegenhaltungen:
- CN-A- 108 986 278
- US-A1- 2016 352 702

## Beschreibung

Die Erfindung betrifft ein Verfahren zur Rekonfiguration eines IoT-Geräts. Die Erfindung betrifft insbesondere das Problem, wie ein Rücksetzen (in anderen Worten: Rekonfigurieren) eines IoT-Geräts geschützt erfolgen kann, ohne dass dazu das Gerät selbst über ein Netzwerk mit einem Cloud-Backend kommunizieren muss.

### EINFÜHRUNG

Ein solches Verfahren ist beispielsweise aus der US 2016/352702 A1 bekannt. Dort ist ein Mechanismus zum Zurücksetzen eines Passwortes beschrieben. Hierzu löst ein Nutzer, der für das zu schützende Gerät autorisiert wurde, das Zurücksetzen des Passwortes aus, indem er eine entsprechende Anfrage an einen Zurücksetzungsdienst sendet. Er erhält anschließend von dem Zurücksetzungsdienst eine digital signierte Email, mit deren Hilfe ein Zurücksetzen des Passwortes vor Ort ermöglicht ist.

Ein weiteres Verfahren dieser Art ist aus der CN 108 986 278 A bekannt

IoT-Geräte erfassen Daten und senden sie geschützt an einen Cloud-Backend. Ein Beispiel für ein solches loT-Gerät ist das Produkt "Sensformer^{®}" der Firma Siemens, das Überwachungsdaten von Transformatoren erfasst und zur Auswertung an einen Cloud-Backend über eine kryptographisch geschützte Kommunikationsverbindung, im Allgemeinen ein TLS-Protokoll, schickt.

Diese IoT-Geräte müssen konfiguriert werden. Die Konfiguration kann remote über die Cloud-Schnittstelle oder über eine lokale Administrationsschnittstelle (Command Line Interface oder Web-Server) erfolgen. Um eine unberechtigte Konfigurationsänderung zu verhindern, ist eine Authentifizierung des Servicezugangs erforderlich. An der lokalen Administrationsschnittstelle ist dazu typischerweise ein Passwort oder ein vergleichbarer Zugangscode einzugeben.

Wenn der Zugangscode nicht mehr bekannt ist, kann das betroffene Gerät nicht mehr konfiguriert und verwendet werden. Wenn nun auch die Kommunikation zum Cloud-Backend z.B. durch eine vorangegangene Fehlkonfiguration unterbrochen ist, ist das Gerät unbrauchbar und muss eingeschickt werden.

Daher besteht ein Bedarf, einen Gerätezugangscode bzw. die gesamte Gerätekonfiguration zurücksetzen zu können (Password Reset / Factory Reset), um den Zugriff auf den lokalen Administrationszugang wieder zu erlangen. Dies muss geschützt erfolgen, um ein unzulässiges Zurücksetzen zu verhindern.

### ALLGEMEINE BESCHREIBUNG DER ERFINDUNG

Das erfindungsgemäße Verfahren gemäß Anspruch 1 bietet solch ein Verfahren. Vorteilhafte Varianten und Weiterbildungen sind in den abhängigen Ansprüchen, der Beschreibung und den Abbildungen offenbart.

Das erfindungsgemäße Verfahren zur Rekonfiguration eines über ein Netzwerk mit einem Cloud-Backend verbindbaren IoT-Geräts umfasst die folgenden Schritte:
- Speichern eines lokal einzugebenden Zugangscodes in dem Cloud-Backend,
- Speichern des Zugangscodes oder einer davon abhängig gebildeten Prüfinformation auf dem IoT-Gerät,
- Abfragen des Zugangscodes von dem Cloud-Backend,
- Eingeben des abgefragten Zugangscodes an einer lokalen Konfigurationsschnittstelle des IoT-Geräts oder an einem mit der lokalen Konfigurationsschnittstelle des IoT-Geräts verbundenen Eingabegerät,
- Abgleichen des eingegebenen Zugangscodes mit dem auf dem IoT-Gerät gespeicherten Zugangscode bzw. der davon abhängig gebildeten Prüfinformation und
- Freigeben des IoT-Geräts zur Rekonfiguration bei einem positiven Abgleich des eingegebenen Zugangscodes mit dem auf dem IoT-Gerät gespeicherten Zugangscode bzw. der davon abhängig gebildeten Prüfinformation, wobei die Rekonfiguration rückgängig gemacht wird, wenn sich das IoT-Gerät nicht innerhalb eines vorbestimmten Zeitraums nach der Rekonfiguration wieder mit dem Cloud-Backend verbunden hat.

Die ersten beiden Schritte müssen dabei zwingend vor den restlichen Schritten durchgeführt werden. Sie können auch als vorbereitende Schritte bezeichnet werden. Das Speichern des Zugangscodes bzw. der davon abhängig gebildeten Prüfinformation am IoT-Gerät kann bereits im Werk bei der Produktion des IoT-Geräts erfolgen. Alternativ können der Zugangscode bzw. die Prüfinformation auch durch den Kunden beim Onboarding, also bei der Inbetriebnahme des IoT-Geräts, erfolgen. Auch ist es möglich, dass dies automatisch wiederholt erfolgt, z.B. täglich, wöchentlich oder monatlich. Dies hat den Vorteil, dass automatisch neue Zugangscodes und eine zugeordnete Prüfinformation eingerichtet werden. Dadurch können zurückliegend eingerichtete Zugangscodes nicht mehr missbräuchlich verwendet werden, selbst wenn sie einem Angreifer bekannt geworden sein sollten.

Vorteilhafterweise findet bei der Inbetriebnahme des IoT-Geräts auch ein Aufbau einer Verbindung des IoT-Geräts mit dem Cloud-Backend statt.

Die folgenden Schritte, das heißt das Abfragen, Eingeben und Abgleichen des Zugangscodes, finden dann statt, wenn das IoT-Gerät konkret rekonfiguriert werden soll, beispielsweise weil eine Kommunikationsverbindung zwischen dem IoT-Gerät und dem Cloud-Backend nicht mehr funktioniert.

Generell kann es sich bei dem Zugangscode zum Beispiel um einen Zufallswert, der Buchstaben, Ziffern und/oder Sonderzeichen aufweist, handeln. Allgemein kann es sich auch um eine Bitfolge oder um eine XML-Datenstruktur oder eine JSON-Datenstruktur handeln.

Der Zugangscode kann in einer ersten Variante von dem IoT-Gerät selbst gebildet (in anderen Worten: generiert) werden.

Alternativ kann der Zugangscode auch von dem Cloud-Backend gebildet werden.

In einer weiteren Variante wird ein erster Zufallswert von dem IoT-Gerät und ein zweiter Zufallswert von dem Cloud-Backend gebildet. Basierend darauf wird anschließend der gemeinsame Zugangscode generiert.

Im Rahmen dieser Patentanmeldung werden die Begriffe "Zugangscode" und "Gerätezugangscode" synonym verwendet. Ferner wird im Rahmen dieser Patentanmeldung "IoT-Gerät" an einigen Stellen der besseren Lesbarkeit halber mit "Gerät" abgekürzt.

Unter einem IoT-Gerät wird im Rahmen dieser Patentanmeldung allgemein ein kabelgebunden oder drahtlos verbindbares Gerät verstanden, das Daten generiert und/oder Steuerbefehle umsetzt. Ein IoT-Gerät wird fachsprachlich gelegentlich auch als "Edge Device" oder "Smart Edge Device" bezeichnet.

In einer speziellen Ausführungsform überwacht das IoT-Gerät einen Transformator. Das IoT-Gerät übermittelt beispielsweise Ölstand, Temperatur, Unterspannungs-Wicklungsstrom und/oder die GPS-Positionierung des Transformators in die Cloud.

Unter der Cloud-Backend wird eine über ein öffentliches oder privates Netzwerk erreichbarer IT-Dienst verstanden. Üblicherweise ist ein Cloud-Backend über das Internet oder ein öffentliches Mobilfunknetz, beispielsweise 3G, LTE, 5G, LoRa, NB-IoT oder SigFox, erreichbar. Beispiele für ein Cloud-Backend sind Siemens MindSphere, Microsoft Azure, Amazon AWS. Die Datenübertragung kann z.B. über ein TLS-Protokoll (TLS: Transport Layer Security) kryptographisch geschützt erfolgen. Der Cloud-Backend speichert den lokal einzugebenden Zugangscode, sodass dieser bei Bedarf einem berechtigten Nutzer bereitgestellt werden kann. Das IoT-Gerät kann den Zugangscode direkt oder eine davon abhängig gebildete Prüfinformation speichern. Die Prüfinformation ermöglicht dem IoT-Gerät, die Gültigkeit eines lokal eingegebenen Zugangscodes zu überprüfen (wie dem Fachmann von Passwortprüfungen bekannt).

Zu einem späteren Zeitpunkt kann der lokal am IoT-Gerät einzugebende Zugangscode somit vom Cloud-Backend durch einen berechtigten Nutzer abgefragt werden. Der Zugangscode kann z.B. angezeigt werden oder als Textdatei bereitgestellt werden. Er kann als Graphik-Element angezeigt werden, um ein einfaches Kopieren des Zugangscodes per Copy&Paste zu verhindern.

Der von dem Cloud-Backend abgefragte Zugangscode wird vorteilhafterweise an einer lokalen Konfigurationsschnittstelle des IoT-Geräts eingegeben. Hier kann es sich beispielsweise um eine RS232-, USB-, SPI- oder I2C-Schnittstelle handeln. Die Eingabe erfolgt vorteilhafterweise mittels eines mit der lokalen Konfigurationsschnittstelle per LAN-Kabel verbundenen Eingabegeräts. Es ist auch möglich, dass das IoT-Gerät eine Bedienschnittstelle, z.B. eine Tastatur oder einen berührungsempfindlichen Bildschirm (Touch Screen) aufweist, die die Eingabe des Zugangscodes ermöglichen.

Weiterhin kann der Cloud-Dienst den zugreifenden Nutzer authentifizieren und loggen, welcher Nutzer einen Gerätezugangscode erhalten hat. Dies ermöglicht, den auf ein Gerät lokal zugreifenden Nutzer zu identifizieren, obwohl das Gerät selbst nur einen einfachen Gerätezugangscode technisch unterstützt. Dies unterstützt, die Anforderung der IEC62443-4.2 nach einer "unique user identification" (requirement CR1.1 (1)) umzusetzen.

Der lokal einzugebende Zugangscode kann unterschiedliche Arten von Zugang zu dem IoT-Gerät ermöglichen: Erstens ist mittels des Zugangscodes ein direkter Zugang zum Konfigurationsmenü des IoT-Geräts denkbar. Zweitens könnte der Zugangscode ein Zurücksetzen eines lokalen Zugangspassworts ermöglichen. Das Zugangspasswort müsste in diesem Fall vom Nutzer neu gesetzt werden, um Zugang zu Konfigurationsmenü zu erlangen. Drittens ist es denkbar, dass mittels des Zugangscodes direkt ein "Factory Reset", d.h. ein Zurücksetzen der kompletten Geräteeinstellungen auf Werkseinstellung erfolgt.

Eine der genannten Arten von Zugang kann bei einem IoT-Gerät fest vorgegeben sein. In einer Variante können jedoch mehrere Zugangscodes mit unterschiedlicher verbundener Aktion vorbereitet werden, die über den Cloud-Backend bei Bedarf berechtigten Nutzern bereitgestellt werden können. Ein Gerät führt dann die entsprechende Aktion aus, abhängig davon, welcher Zugangscode eingegeben wurde.

Weiterhin können eine Mehrzahl oder Vielzahl von lokal einzugebenden Zugangscodes vorbereitet werden.

Ein Zugangscode ist vorzugsweise nur beschränkt (insbesondere nur einmalig) nutzbar. Nach Wiederherstellung der Cloud-Konnektivität wird vorzugsweise ein neuer Satz von lokalen Gerätezugangscodes eingerichtet.

In einer Variante stellt der Cloud-Backend einen Zugangscode zur Rekonfiguration nur dann bereit, wenn das betroffene Gerät für einen gewissen Zeitraum (z.B. 1 Stunde, 1 Tag, 1 Woche) sich nicht über das Netzwerk bei dem Cloud-Backend angemeldet hat und/oder seine Status-Daten aktualisiert hat. Dies hat den Vorteil, dass unabhängig von Nutzerberechtigungen ein Zugangscode für einen lokalen Administrationszugang zum Gerät nur dann bereitgestellt wird, wenn das betroffene Gerät sich für längere Zeit nicht mehr mit dem Cloud-Backend verbinden konnte. Im regulären Betrieb, wenn der Cloud-Zugang wie vorgesehen funktioniert, kann der Rücksetzcode, d.h. der Zugangscode, dagegen nicht abgefragt werden. Hier muss die Gerätekonfiguration dann über den Cloud-Backend erfolgen.

Im Rahmen der Erfindung muss nach einem lokalen Zugang innerhalb eines Zeitfensters (z.B. 10 Minuten, 1 Stunde, 24 Stunden) eine funktionierende Cloud-Kommunikation wiedereingerichtet werden. Falls dies nicht gelingt, reaktiviert das Gerät automatisch wieder die gesicherte bisherige Konfiguration.

Die Erfindung ermöglicht, dass ein IoT-Gerät (konkret z.B. ein Sensformer^{®} IoT-Gerät der Firma Siemens), dessen Konfiguration für den Cloud-Zugriff nicht mehr funktioniert, geschützt wieder in Betrieb genommen werden kann. Dies funktioniert insbesondere auch dann, wenn das IoT-Gerät nicht mehr mit dem Cloud-Backend kommunizieren kann (z.B. weil die Netzwerk-Konfiguration für den Cloud-Zugang fehlerhaft konfiguriert wurde).

Weiterhin muss auf dem IoT-Gerät nicht notwendigerweise ein lokales Servicezugangs-Passwort manuell konfiguriert werden. Solange das IoT-Gerät wie vorgesehen funktioniert, kann es über die Cloud-Schnittstelle administriert (in anderen Worten: konfiguriert) werden. Nur wenn der Zugriff auf die Cloud nicht mehr funktioniert, wird der vorbereitete Zugangscode bereitgestellt. Dies hat den Vorteil, dass im Normalbetrieb ein Zugriff auf die lokale Konfigurationsschnittstelle des IoT-Geräts nicht möglich ist.

### KURZE BESCHREIBUNG DER ZEICHNUNGEN

Nachfolgend wird die Erfindung beispielhaft und schematisch anhand zweier Abbildungen veranschaulicht. Es zeigen die
- Fig. 1: eine Anordnung von IoT-Gerät, Cloud-Backend und Nutzer nach dem Stand der Technik, sowie
- Fig. 2: einen Ablaufplan eines Verfahrens zur Rekonfiguration eines IoT-Geräts gemäß einer Ausführungsform der Erfindung.

### DETAILLIERTE BESCHREIBUNG DER ZEICHNUNGEN

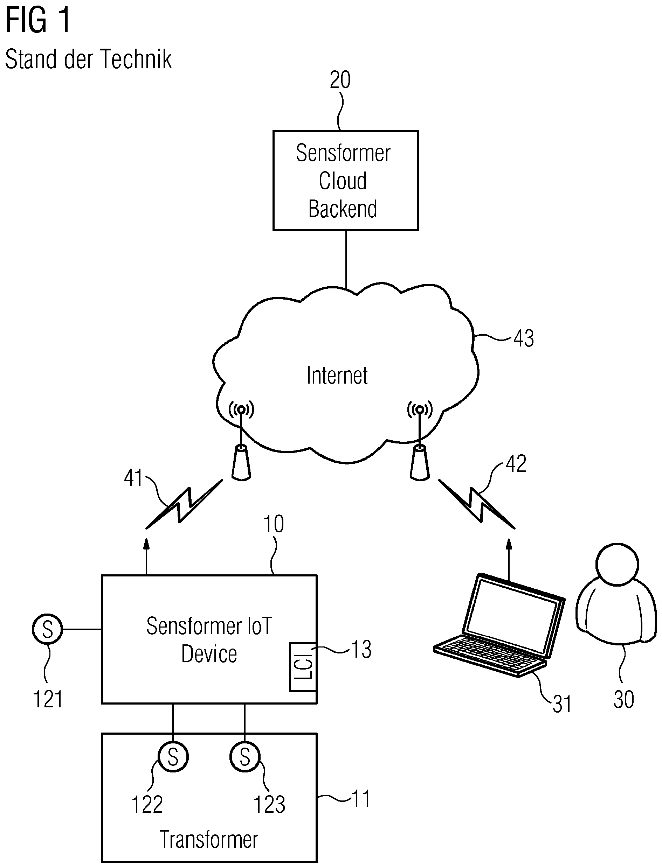

Die Fig. 1 zeigt ein Anwendungsszenario, wie herkömmlicherweise ein IoT-Gerät 10 geschützt rekonfiguriert werden kann. Als IoT-Gerät 10 wird beispielshaft ein "Sensformer^{®} IoT-Gerät", abgekürzt: Sensformer^{®}, der Firma Siemens angenommen. Der Sensformer^{®} 10 hat die Aufgabe, einen mit ihm verbundenen Transformator 11 zu überwachen. Der Sensformer^{®} 10 erfasst über einen eigenen Sensor 121 sowie über Sensoren 122, 123 des Transformators 11 Überwachungs-/Betriebsdaten des Transformators 11 (z.B. Temperatur und Füllstand der Kühlflüssigkeit) sowie die Umgebungstemperatur. Diese Informationen werden über eine Mobilfunkschnittstelle 41 (z.B. UMTS, LTE, 5G, LoRa, NB-IoT oder SigFox) und dem Internet 43 an einen Cloud-Backend 20 übertragen. Dadurch kann z.B. erkannt werden, wenn der Transformator 11 eine Wartung benötigt (predictive maintenance). Auf dem Sensformer^{®} 10 ist eine Firmware installiert, um die Sensordaten zu erfassen, ggf. vorzuverarbeiten, und um eine Datenübertragungsverbindung zum Cloud-Backend 20 aufzubauen. Letztere kann z.B. über TCP/IP, TLS und HTTP, MQTT, OPC UA oder CoAP realisiert werden.

Weiterhin wird eine zweite Verbindung aufgebaut, um das Sensformer IoT-Gerät 10 zu verwalten, d.h. um Konfigurationseinstellungen remote zu ändern oder um ein Firmware-Update einzuspielen. Ein Service-Techniker 30 verbindet sich dazu per Eingabegerät 31 und einem Webbrowser mit dem Konfigurationsinterface des Cloud-Dienstes (Cloud-Service) und gibt die Konfigurations-Änderungen ein, die dann an das Sensformer^{®} IoT-Gerät 10 übertragen werden. Die Verbindung zwischen dem Eingabegerät 31, z.B. einem Laptop, und dem Internet 43 ist in Fig. 1 mit der Bezugszeichen 42 gekennzeichnet.

In seltenen Fällen, z.B. bei einer technischen Fehlfunktion oder bei einer Fehlbedienung kann jedoch der Fall auftreten, dass die eingespielte Konfiguration nicht funktionsfähig ist. So kann z.B. eine falsche URL des Cloud-Dienstes, ein falsches Zertifikat des Cloud-Services, ein falsches Gerätezertifikat, ein falscher APN-Name (Access Point Name, ein Netzwerkname für einen Mobilfunkzugang) der Mobilfunkkonfiguration o.ä. dazu führen, dass das Sensformer^{®} IoT-Gerät 10 sich nicht mehr mit dem Cloud-Backend 20 verbinden kann. Die Konfiguration kann dann auch nicht mehr über den Cloud-Backend 20 korrigiert werden.

Daher ist für solche Fälle noch eine lokale Konfigurationsschnittstelle (LCI) 13 vorgesehen, die z.B. als RS232-, USB-, SPI- oder I2C-Schnittstelle realisiert sein kann. Der Service-Techniker 31 kann sich über eine lokale Kabelverbindung mit der lokale Konfigurationsschnittstelle 13 des Sensformer^{®} IoT-Geräts 10 verbinden. Diese Verbindung ist in der Regel über ein Passwort oder Zugangscode geschützt, welches nur dem Service-Techniker 30 bekannt ist. Hat er dieses vergessen, ist kein Zugriff auf das IoT-Gerät 10 mehr möglich und das IoT-Gerät 10 muss zur Rekonfiguration z.B. eingeschickt werden.

Die Erfindung schlägt nun vor, dass in einem solchen Fall ein vom Cloud-Backend vorab generierter und auf dem IoT-Gerät hinterlegter Zugangscode eingegeben werden muss, um erneut Zugriff auf die Konfigurationseinstellungen zu erlangen. Dabei können automatisch die aktuellen Konfigurationseinstellungen vollständig oder teilweise auf Default-Werte zurückgesetzt werden (z.B. Passwort-Reset, Factory Reset).

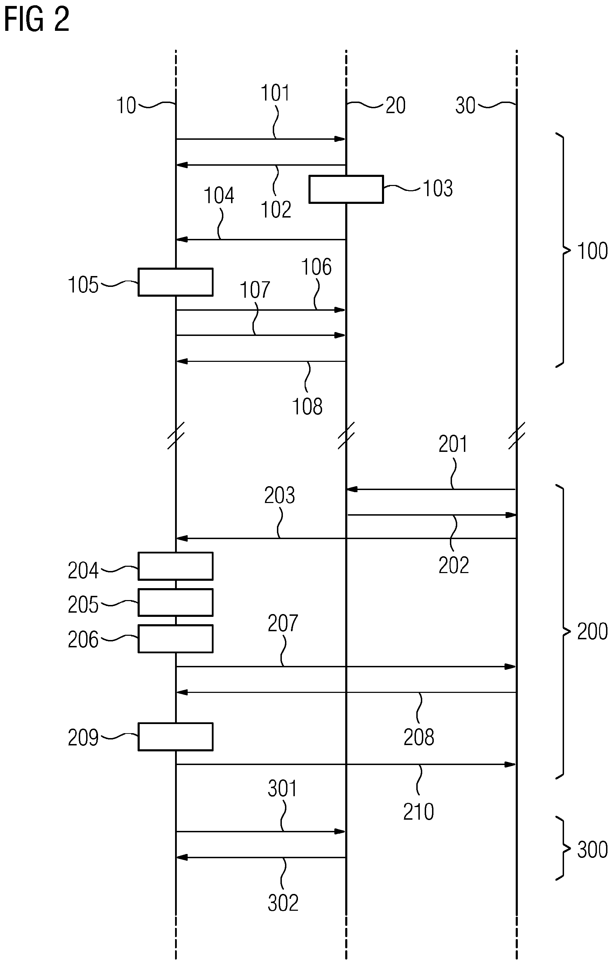

Die Fig. 2 zeigt einen Ablaufplan eines Verfahrens zur Rekonfiguration eines IoT-Geräts 10 gemäß einer Ausführungsform der Erfindung. Es handelt sich dabei nur um einen beispielhaften Ablauf, für den es eine Reihe von Alternativen und Varianten gibt, die dem Fachmann selbstverständlich bereits in der allgemeinen Beschreibung der Erfindung offenbart wurden oder die für ihn ohnehin kraft seines Fachwissens offensichtlich sind.

Das Verfahren zur Rekonfiguration gliedert sich in zwei Phasen: Zunächst in die Phase der Generierung und Hinterlegung eines Zugangscodes (Phase 100); anschließend in die Phase der eigentlichen Rekonfiguration des IoT-Geräts 10 mittels der lokalen Konfigurationsschnittstelle 13 (Phase 200). Ist das IoT-Gerät 10 erfolgreich rekonfiguriert, kann es wieder regulär mit dem Cloud-Backend 20 kommunizieren (Phase 300), und z.B. seine Sensordaten an den Cloud-Backend 20 versenden.

Die erste Phase 100 umfasst im Beispiel der Fig. 2 die folgenden Schritte: Senden eines Verbindungssignals vom IoT-Gerät 10 an den Cloud-Backend 20 (Schritt 101); Senden einer Empfangsbestätigung des Verbindungssignals von dem Cloud-Backend 20 zurück an das IoT-Gerät 10 (Schritt 102). Daraufhin erzeugt der Cloud-Backend 20 einen lokal einzugebenden Zugangscode und speichert diesen in dem Cloud-Backend 20 (Schritt 103). Der erzeugte Zugangscode oder einer davon abhängig gebildeten Prüfinformation wird anschließend von dem Cloud-Backend 20 an das IoT-Gerät 10 geschickt (Schritt 104). Dieser wird im nächsten Schritt 105 auf dem IoT-Gerät 10 gespeichert (Schritt 105). Es folgen eine Bestätigung, dass der Zugangscode bzw. die Prüfinformation auf dem IoT-Gerät 10 abgespeichert wurden (Schritt 106) und ein Signal, dass die Verbindung zwischen dem IoT-Gerät 10 und dem Cloud-Backend 20 unterbrochen wird (Schritt 107). Dies bestätigt abschließend der Cloud-Backend 20 dem IoT-Gerät 10 (Schritt 108).

Kommt es nun zu einer ungeplanten und ungewollten Unterbrechung der Verbindung zwischen dem IoT-Gerät 10 und dem Cloud-Backend 20 und entsteht das Bedürfnis nach einer Rekonfiguration des IoT-Geräts 10, tritt Phase 200 mit den folgenden Schritten in Kraft: Senden einer Anfrage bezüglich des Zugangscodes von einem Nutzer 30 an den Cloud-Backend 20 (Schritt 201); Antworten des Cloud-Backends 20 an den Nutzer 30 mit Zusendung des gespeicherten Zugangscodes (Schritt 202); Eingabe des erhaltenen Zugangscodes am IoT-Gerät 10, beispielsweise mittels eines mit LAN-Verbindung an der lokalen Konfigurationsschnittstelle des IoT-Geräts 10 verbundenen Laptops (Schritt 203). Anschließend wird auf dem IoT-Gerät 10 der eingegebene Zugangscode mit dem vorab gespeicherten Zugangscode bzw. der zugehörigen Prüfinformation abgeglichen (Schritt 204). Stimmen beide Zugangscodes überein bzw. passt die Prüfinformation zu dem eingegebenen Zugangscode, findet in dem in Fig. 2 dargestellten Beispiel ein Factory-Reset statt (Schritt 205). Dies ermöglicht unter anderem eine Änderung der Konfigurationseinstellungen durch den Nutzer 30 (Schritt 206). Dies wird dem Nutzer 30 kommuniziert (Schritt 207). Im nächsten Schritt rekonfiguriert der Nutzer 30 das IoT-Gerät nach seinen Vorstellungen und Wünschen (Schritt 208). Die neuen Konfigurationseinstellungen werden auf dem IoT-Gerät 10 gespeichert (Schritt 209) und abschließend eine Bestätigung an den Nutzer 30 geschickt (Schritt 210).

Das IoT-Gerät 10 ist nun wieder für einen Zugang zu dem Cloud-Backend 20 einsatzfähig, so dass die dritte Phase 300, der reguläre Zugang des IoT-Geräts 10 zum Cloud-Backend 20, in Kraft tritt. Dies ist in Fig. 2 durch ein Senden eines Verbindungssignals vom IoT-Gerät 10 an den Cloud-Backend 20 (Schritt 301) und das Senden einer Empfangsbestätigung von dem Cloud-Backend 20 an das IoT-Gerät 10 symbolisiert (Schritt 302).

Das in Fig. 2 dargestellte Verfahren zeigt also beispielhaft, wie ein IoT-Gerät geschützt rekonfiguriert werden kann, ohne dass dazu (während der Rekonfiguration) das IoT-Gerät selbst mit dem Cloud-Backend kommunizieren muss.

### BEZUGSZEICHENLISTE

- 10: IoT-Gerät, z.B. ein Sensformer^{®}
- 11: Transformator
- 121: Sensor
- 122: Sensor
- 123: Sensor
- 13: Lokale Konfigurationsschnittstelle

- 20: Cloud-Backend

- 30: Nutzer, Service-Techniker
- 31: Eingabegerät

- 41: Verbindung zwischen IoT-Gerät und Internet
- 42: Verbindung zwischen Eingabegerät und Internet
- 43: Internetverbindung

- 100: Generierung und Hinterlegung eines Zugangs-codes
- 101...108: Schritte
- 200: Rekonfiguration des IoT-Geräts über dessen lokale Konfigurationsschnittstelle
- 201...210: Schritte

- 300: Regulärer Zugang des IoT-Geräts zum Cloud-Backend
- 301, 302: Schritte

## Patentansprüche

1. Verfahren zur Rekonfiguration eines IoT-Geräts (10), wobei das IoT-Gerät (10) über ein Netzwerk mit einem Cloud-Backend (20) verbindbar ist, umfassend die folgenden Schritte:
- Speichern eines lokal einzugebenden Zugangscodes in dem Cloud-Backend (20),
- Speichern des Zugangscodes oder einer davon abhängig gebildeten Prüfinformation auf dem IoT-Gerät (10),
- Abfragen des Zugangscodes von dem Cloud-Backend (20),
- Eingeben des abgefragten Zugangscodes an einer lokalen Konfigurationsschnittstelle (13) des IoT-Geräts (10) oder an einem mit der lokalen Konfigurationsschnittstelle (13) des IoT-Geräts (10) verbundenen Eingabegerät (31),
- Abgleichen des eingegebenen Zugangscodes mit dem auf dem IoT-Gerät (10) gespeicherten Zugangscode bzw. der davon abhängig gebildeten Prüfinformation und
- Freigeben des IoT-Geräts (10) zur Rekonfiguration bei einem positiven Abgleich des eingegebenen Zugangscodes mit dem auf dem IoT-Gerät (10) gespeicherten Zugangscode bzw. der davon abhängig gebildeten Prüfinformation, wobei die Rekonfiguration rückgängig gemacht wird, wenn sich das IoT-Gerät (10) nicht innerhalb eines vorbestimmten Zeitraums nach der Rekonfiguration wieder mit dem Cloud-Backend (20) verbunden hat.

2. Verfahren nach Anspruch 1,
wobei der Zugangscode von dem IoT-Gerät (10) oder von dem Cloud-Backend (20) generiert wird.

3. Verfahren nach Anspruch 1,
wobei
- von dem IoT-Gerät (10) ein erster Zufallswert und von dem Cloud-Backend (20) ein zweiter Zufallswert gebildet wird und
- basierend auf dem ersten Zufallswert und dem zweiten Zufallswert der Zugangscode gebildet wird.

4. Verfahren nach einem der vorhergehenden Ansprüche,
wobei das Abfragen des Zugangscodes von dem Cloud-Backend (20) die folgenden Unterschritte beinhaltet:
- Senden einer Anfrage an den Cloud-Backend (20) und
- Bereitstellen des Zugangscodes.

5. Verfahren nach Anspruch 4,
wobei die Bereitstellung des Zugangscodes mittels einer Anzeige des Zugangscodes, einer den Zugangscode enthaltenden Textdatei oder eines den Zugangscode abbildenden Graphik-Elements erfolgt.

6. Verfahren nach einem der Ansprüche 4 oder 5,
wobei der Zugangscode nur unter der Bedingung bereitgestellt wird, dass sich das IoT-Gerät (10) für einen vorbestimmten Zeitraum nicht über das Netzwerk bei dem Cloud-Backend (20) angemeldet hat.

7. Verfahren nach einem der vorhergehenden Ansprüche,
wobei das Abfragen des Zugangscodes von dem Cloud-Backend (20)
- ein Authentifizieren des abfragenden Nutzers (30) und/oder
- ein Erfassen und Abspeichern des abfragenden Nutzers (30) beinhaltet.

8. Verfahren nach einem der vorhergehenden Ansprüche,
wobei der von dem Cloud-Backend (20) abgefragte Zugangscode an einem Eingabegerät (31), das mit der lokalen Konfigurationsschnittstelle (13) des IoT-Geräts (10) mittels eines LAN-Kabels verbunden ist, eingegeben wird.

9. Verfahren nach einem der vorhergehenden Ansprüche,
wobei bei einem positiven Abgleich des eingegebenen Zugangscodes mit dem auf dem IoT-Gerät (10) gespeicherten Zugangscode bzw. der davon abhängig gebildeten Prüfinformation
- ein lokales Zugangspasswort für die lokale Rekonfiguration des IoT-Geräts (10) bereitgestellt wird oder
- ein Zurücksetzen der kompletten Geräteeinstellungen des I-oT-Geräts (10) auf eine Werkseinstellung erfolgt.

10. Verfahren nach einem der vorhergehenden Ansprüche,
wobei der Zugangscode nur mit einer beschränkten Anzahl, insbesondere einmalig, nutzbar ist.

11. Verfahren nach einem der vorhergehenden Ansprüche,
wobei das IoT-Gerät (10) einen Transformator überwacht.

## Claims

1. Method for reconfiguring an IoT device (10), wherein the IoT device (10) is able to be connected to a cloud backend (20) via a network, comprising the following steps:
- storing an access code, to be input locally, in the cloud backend (20),
- storing the access code or check information formed based thereon on the IoT device (10),
- querying the access code from the cloud backend (20),
- inputting the queried access code on a local configuration interface (13) of the IoT device (10) or on an input device (31) connected to the local configuration interface (13) of the IoT device (10),
- comparing the input access code with the access code stored on the IoT device (10) or the check information formed based thereon, and
- authorizing the IoT device (10) to be reconfigured in the event of a positive comparison of the input access code with the access code stored on the IoT device (10) or the check information formed based thereon, wherein the reconfiguration is reversed if the IoT device (10) has not reconnected to the cloud backend (20) within a predetermined period of time following the reconfiguration.

2. Method according to Claim 1,
wherein the access code is generated by the IoT device (10) or by the cloud backend (20).

3. Method according to Claim 1,
wherein
- a first random value is formed by the IoT device (10) and a second random value is formed by the cloud backend (20) and
- the access code is formed based on the first random value and the second random value.

4. Method according to one of the preceding claims,
wherein querying the access code from the cloud backend (20) involves the following substeps:
- transmitting a request to the cloud backend (20) and
- providing the access code.

5. Method according to Claim 4,
wherein the access code is provided by way of displaying an access code, a text file containing the access code or a graphical element depicting the access code.

6. Method according to either of Claims 4 and 5,
wherein the access code is provided only on the condition that the IoT device (10) has not logged onto the cloud backend (20) via the network for a predetermined period of time.

7. Method according to one of the preceding claims,
wherein querying the access code from the cloud backend (20) involves
- authenticating the querying user (30) and/or
- recording and storing the querying user (30).

8. Method according to one of the preceding claims,
wherein the access code queried from the cloud backend (20) is input on an input device (31) that is connected to the local configuration interface (13) of the IoT device (10) by way of a LAN cable.

9. Method according to one of the preceding claims,
wherein, in the event of a positive comparison of the input access code with the access code stored on the IoT device (10) or the check information formed based thereon,
- a local access password is provided for the local reconfiguration of the IoT device (10) or
- all of the device settings of the IoT device (10) are reset to factory settings.

10. Method according to one of the preceding claims,
wherein the access code is able to be used only a limited number of times, in particular once.

11. Method according to one of the preceding claims,
wherein the IoT device (10) monitors a transformer.

## Revendications

1. Procédé de reconfiguration d'un appareil (10) IDO, dans lequel l'appareil (10) IDO peut être relié à un backend (20) de nuage par un réseau, comprenant les stades suivants :
- mise en mémoire d'un code d'accès à entrer localement dans le backend (20) de nuage,
- mise en mémoire sur l'appareil (10) IDO du code d'accès ou d'une information de contrôle, qui est formée en fonction de celui-ci,
- demande du code d'accès par le backend (20) de nuage,
- entrée du code d'accès demandé sur une interface (13) locale de configuration de l'appareil (10) IDO ou sur un appareil (31) d'entrée relié à l'interface (13) locale de configuration de l'appareil (10) IDO,
- égalisation du code d'accès entré avec le code d'accès mis en mémoire sur l'appareil (10) IDO ou avec l'information de contrôle, qui est formée en fonction de celui-ci, et
- validation de l'appareil (10) IDO pour la reconfiguration, si égalisation positive du code d'accès entré avec le code d'accès mis en mémoire sur l'appareil (10) IDO ou avec l'information de contrôle, qui est formée en fonction de celui-ci, dans lequel on annule la reconfiguration si l'appareil (10) IDO ne s'est pas, dans un laps de temps défini à l'avance après la configuration, relié à nouveau au backend (20) de nuage.

2. Procédé suivant la revendication 1,
dans lequel on crée le code d'accès par l'appareil (10) IDO ou par le backend (20) de nuage.

3. Procédé suivant la revendication 1,
dans lequel
- on forme, par l'appareil (10) IDO, une première valeur aléatoire et, par le backend (20) de nuage, une deuxième valeur aléatoire et
- on forme le code d'accès sur la base de la première valeur aléatoire et de la deuxième valeur aléatoire.

4. Procédé suivant l'une des revendications précédentes,
dans lequel la demande du code d'accès par le backend (20) de nuage comporte les sous-stades suivants :
- envoi d'une demande au backend (20) de nuage et
- mise à disposition du code d'accès.

5. Procédé suivant la revendication 4,
dans lequel la mise à disposition du code d'accès s'effectue au moyen d'une indication du code d'accès, d'un fichier de texte contenant le code d'accès ou d'un élément graphique reproduisant le code d'accès.

6. Procédé suivant l'une des revendications 4 ou 5,
dans lequel on met à disposition le code d'accès seulement à la condition que l'appareil (10) IDO ne s'est pas, pendant un laps de temps défini à l'avance, annoncé auprès du backend (20) de nuage par le réseau.

7. Procédé suivant l'une des revendications précédentes,
dans lequel la demande du code d'accès par le backend (20) de nuage comporte
- une authentification de l'utilisateur (30) demandant et/ou
- une détection et une mise en mémoire de l'utilisateur (30) demandant.

8. Procédé suivant l'une des revendications précédentes,
dans lequel on entre le code d'accès, demandé par le backend (20) de nuage, sur un appareil (31) d'entrée, qui est relié à l'interface (13) locale de configuration de l'appareil (10) IDO au moyen d'un câble LAN.

9. Procédé suivant l'une des revendications précédentes,
dans lequel, s'il y a une égalisation positive du code d'accès entré avec le code d'accès mis en mémoire sur l'appareil (10) IDO ou sur l'information de contrôle formée en fonction de celui-ci,
- on met à disposition de la reconfiguration locale de l'appareil (10) IDO un mot de passe local d'accès ou
- on remet sur un réglage de travail les réglages complets de l'appareil (10) IDO.

10. Procédé suivant l'une des revendications précédentes,
dans lequel le code d'accès ne peut être utilisé qu'en un nombre limité, notamment une fois.

11. Procédé suivant l'une des revendications précédentes,
dans lequel l'appareil (10) IDO contrôle un transformateur.
